# EUROPÄISCHE PATENTSCHRIFT

(11) **EP 3 894 126 B1**
(45) Veröffentlichungstag und Bekanntmachung des Hinweises auf die Patenterteilung: **29.05.2024**
(21) Anmeldenummer: 19831623.4
(22) Anmeldetag: 13.12.2019
(51) Int. Cl.: H01M 10/04, H01M 10/0525, B23K 20/10, B23K 26/21, B23K 28/02

(54) **ULTRASCHALLSCHWEISSVORRICHTUNG SOWIE VERFAHREN ZUR HERSTELLUNG EINES METALL-FOLIENSTAPELS**
ULTRASONIC WELDING DEVICE AND METHOD FOR PRODUCING A METAL FOIL STACK
DISPOSITIF DE SOUDAGE PAR ULTRASONS AINSI QUE PROCÉDÉ DE FABRICATION D'UNE PILE DE FEUILLES MÉTALLIQUES

(30) Priorität: 14.12.2018 DE 102018221843
(43) Veröffentlichungstag der Anmeldung: 20.10.2021
(73) Patentinhaber: VOLKSWAGEN AG, 38440 Wolfsburg (DE)
(72) Erfinder: BÖHM, Dennis, 38302 Wolfenbüttel (DE); BREUER, Alexander, 29227 Celle (DE)
(74) Vertreter: FDST Patentanwälte
(86) Internationale Anmeldenummer: PCT/EP2019/085024
(87) Internationale Veröffentlichungsnummer: WO 2020/120726

(56) Entgegenhaltungen:
- WO-A1-2018/199439
- DE-A1-102012 018 912
- JP-A- 2015 136 731
- US-A1- 2002 166 617
- US-A1- 2006 169 388
- US-A1- 2013 213 552

## Beschreibung

Die Erfindung betrifft eine Ultraschallschweißvorrichtung mit einer Sonotrode und mit einem Amboss. Des Weiteren betrifft die Erfindung ein Verfahren zur Herstellung eines Metallfolienstapels aus Metallfolien, insbesondere für eine Zelle einer Lithium-lonen-Batterie.

Eine Zelle einer Lithium-Ionen-Batterie weist eine Anzahl an Kathoden und Anoden auf. Die Kathoden und Anoden sind dabei typischerweise mittels Metallfolien gebildet, wobei die Kathoden (Kathodenfolien) und die Anoden (Anodenfolien) alternierend übereinandergestapelt sind, und wobei zwischen den Kathoden und den Anoden jeweils ein Separator (eine Separatorfolie) angeordnet ist. Die Kathoden sind jeweils elektrisch leitend miteinander, und insbesondere zusätzlich mit einem sogenannten Zellableiter (Tab), verbunden. In analoger Weise sind die Anoden jeweils elektrisch leitend miteinander, und insbesondere zusätzlich mit einem sogenannten Zellableiter (Tab), verbunden.

Die Anodenfolien und die Kathodenfolien weisen typischerweise einen mit einem Anodenmaterial bzw. mit einem Kathodenmaterial beschichteten Abschnitt auf. Zum miteinander Verbinden der Anodenfolien bzw. der Kathodenfolien weisen diese geeigneterweise jeweils einen seitlich abstehenden und unbeschichteten zweiten Abschnitt auf, welcher auch als Fähnchen bezeichnet wird, und welcher zum Verbinden mit den anderen Folien und ggf. mit dem Zellableiter vorgesehen ist.

Beispielsweise werden die Fähnchen der Anoden bzw. die Fähnchen der Kathoden zusammen mit oder ohne den jeweiligen Zellableiter miteinander ultraschallverschweißt. Eine solche Verbindung durch Ultraschallschweißen ist allerdings vergleichsweise unzuverlässig, mit anderen Worten nicht dauerfest, sodass sich die Verbindungen untereinander im Laufe der Lebenszeit der Batterie lösen können.

Alternativ hierzu werden die Metallfolien mit oder ohne den Zellableiter mittels eines Laserstrahls miteinander verschweißt. Hierbei können jedoch Lufteinschlüsse und/oder Hohlräume zwischen den Metallfolien entstehen, weshalb eine elektrische Leitfähigkeit vergleichsweise niedrig und/oder eine Robustheit der Verbindung verringert ist.

Aus der DE 10 2012 018 912 A1 ist ein Verfahren zur Herstellung eines Folienstapels bekannt, bei welchen die zu fügenden Metallfolien zunächst mittels einer Ultraschallschweißvorrichtung vorfixiert und verdichtet werden, und anschließend mittels Laserschweißen (Laserstrahlschweißen) stoffschlüssig miteinander verbunden werden. Hierbei weisen die für das Verdichten verwendeten Schweißwerkzeuge, also die Sonotrode und der Amboss als Fortsätze eine Rautierung auf, deren mittlere Rautiefe zwischen 0,1 µm und 1,0 µm beträgt.

Hierbei kann allerdings, insbesondere aufgrund einer nicht ausreichend definierten Fläche für das Laserstrahlschweißen, der Laserstrahl außerhalb des durch das Ultraschallschweißen verdichteten Bereichs einwirken. Folglich ist eine Verbindung der Metallfolien vergleichsweise unzuverlässig, und/oder eine Robustheit der Verbindung vergleichsweise gering, die Verbindung der Metallfolien untereinander und zum Zellableiter also nicht dauerfest.

Aus der US 2002/166617 A1 ist ein Ultraschallgerät, das Ultraschallenergie erzeugt, um die Materialeigenschaften eines Werkstücks zu ändern. Das Ultraschallgerät Folgendes umfasst dabei ein Horn mit einem ersten Satz von Aktivierungszähnen, und ein Amboss mit einem zweiten Satz Aktivierungszähne, wobei die erste Gruppe von Aktivierungszähnen mit der zweiten Gruppe von Aktivierungszähnen kämmt.

In der JP 2015 136731 A ist ein Verfahren offenbart, bei dem ein Metallfolienstapel zunächst ultraschallverschweißt wird, und anschließend in den verschweißten Bereichen ein Laserschweißvorgang durchgeführt wird.

In der WO 2018/199439 A1 ist ein Verfahren offenbart, bei dem die unbeschichteten Tabs einer Elektrode einer Elektrodenanordnung ultraschallverschweißt werden. Anschließend erfolgt ein zweiter Ultraschallschweißvorgang, bei dem eine Verstärkungsplatte mit dem Tab gefügt wird. Mit einem Laser wird anschließend ein Verbindungselement mit der Verstärkungsplatte verschweißt, wobei das Verbindungselement zur elektrischen Verbindung mit einem Zell-Terminal dient.

Aus der US 2006/169388 A1 ist ein Ultraschallverbindesystem bekannt, dass einen Amboss und eine Sonotrode umfasst, wobei der Amboss und die Sonotrode jeweils äußere Vorsprünge zum Greifen eines äußeren Bereichs und mittlere Vorsprünge zum Greifen eines inneren Bereichs von zu verbindenden Materialschichten aufweisen. Die die äußeren Vorsprünge des Ambosses und der Sonotrode stehen dabei in einer Höhe vor, die geringer ist als die Höhe der mittleren Vorsprünge

In der US 2013/213552 A1 ist eine Ultraschallsonotrode für ein Ultraschallschweißgerät beschrieben. Diese umfasst einen Körper mit mindestens einer Sonotrodenspitze, wobei die Sonotrodenspitze aus einem Material hergestellt ist, das eine niedrige Wärmeleitfähigkeit von nicht mehr als 5 Watt/(Meter · Grad Kelvin) aufweist und auch eine Druckfestigkeit von mindestens 80 MPa und eine Bruchzähigkeit von mindestens 3 MPa(m)^{1/2} aufweist, wobei die Sonotrodenspitze ein Rändelmuster mit einem Aspektverhältnis von weniger als 0,05 aufweist.

Der Erfindung liegt die Aufgabe zugrunde, ein besonders geeignetes Verfahren zur Herstellung eines Metallfolienstapels, sowie eine hierzu geeignete Vorrichtung mit einer Ultraschallschweißvorrichtung Insbesondere soll mittels der Vorrichtung und/oder mittels des Verfahrens eine besonders zuverlässige Verbindung der Metallfolien miteinander, und vorzugsweise zusätzlich mit einem Zellableiter, realisiert sein.

Bezüglich der Vorrichtung wird die Aufgabe erfindungsgemäß gelöst durch die Merkmale des Anspruchs 1. Hinsichtlich des Verfahrens wird die Aufgabe mit den Merkmalen des Anspruchs 5 erfindungsgemäß gelöst. Vorteilhafte Ausgestaltungen und Weiterbildungen sind Gegenstand der Unteransprüche. Dabei gelten die Ausführungen im Zusammenhang mit der Vorrichtung sinngemäß auch für das Verfahren und umgekehrt.

Die Vorrichtung ist zur Herstellung eines Metallfolienstapels vorgesehen. Diese umfasst wiederum eine Ultraschallschweißvorrichtung, die dem Einbringen einer Prägefläche in einen Metallfolienstapel dient, welcher insbesondere für eine Zelle einer Lithium-Ionen-Batterie vorgesehen und ausgebildet ist. Die Ultraschallschweißvorrichtung weist einen Amboss und eine auch als Horn bezeichnete Sonotrode auf, wobei der Amboss oder die Sonotrode eine Anzahl an zu dessen bzw. zu deren Arbeitsfläche emporstehenden ersten Fortsätzen aufweist. Die ersten Fortsätze dienen der Bildung der, insbesondere bahnartigen Prägefläche durch Kompaktieren (Komprimieren, Verdichten) des Metallfolienstapels im Zuge des Ultraschweißvorgangs.

Im Zuge des Ultraschallschweißvorgangs werden mittels der Fortsätze die übereinander gestapelten Metallfolien des Metallfolienstapels gegeneinander verpresst und der Metallfolienstapel im Bereich der ersten Fortsätze komprimiert. Auf diese Weise wird unter Bildung der Prägefläche eine Vertiefung in den Metallfolienstapel eingedrückt.

Die Prägefläche definiert dabei einen Bereich, welcher mittels eines Laserstrahls im Anschluss an das Ultraschallverschweißen beaufschlagt wird, oder eine Bahn, entlang welcher der Laserstrahl zum Lasterstrahlverschweißen der Metallfolien verfahren wird.

Unter einer bahnartigen Fläche wird hierbei eine Fläche verstanden, welche länger als breit ist, und sich insbesondere in deren Längsrichtung entlang einer vorgegebenen Linie (Bahn) erstreckt. Des Weiteren ist unter einer Anzahl an Fortsätzen ein einzelner Fortsatz oder mehr als ein Fortsatz zu verstehen.

Die Prägefläche muss dabei nicht zusammenhängend ausgebildet sein. Aufgrund des Kompaktierens des Metallfolienstapels ist im Bereich der Prägefläche der Abstand zwischen den einzelnen Metallfolien verringert, insbesondere ein Nullspalt eingestellt. Ferner ist die Bildung von Hohlräumen zwischen den Metallfolien und damit einhergehender Lufteinschlüsse beim Laserstrahlschweißen verhindert oder zumindest eine Gefahr dessen deutlich reduziert. Des Weiteren sind aufgrund des Kompaktierens Schwankungen der Dicke des Metallfolienstapels, also der Ausdehnung des Metallfolienstapels in einer Richtung senkrecht zu den Metallfolien, im Bereich der Prägefläche reduziert. Also sind für den darauffolgenden Laserstrahlschweißvorgang homogene Bedingungen, beispielsweise bezüglich einer Eindringtiefe des Laserstrahls, über die Prägefläche realisiert.

Beim eingangs erwähnten Stand der Technik, nämlich der DE 10 2012 018 912 A1, sind der zum Verdichten verwendete Amboss und die Sonotrode geringstmöglich rautiert, um eine Beschädigung der Metallfolien während des Verdichtens zu vermeiden. Hierbei liegt die Dicke der Rautierung liegt für eine Metallfoliendicke von 10 µm, im Bereich von 0,1 µm bis 1,0 µm. Im Gegensatz hierzu ist erfindungsgemäß gezielt eine definierte Fläche für den Laserstrahleintrag gebildet. Die Fläche, auf welche der Laserstrahl zum Laserschweißen treffen soll bzw. entlang welcher der Laser entlangfahren soll, wird mittels der Fortsätze durch das Verdichten der Metallfolien, also durch die Komprimierung der Metallfolien mittels der Fortsätze, unter Bildung der Prägefläche definiert. Die ersten Fortsätze bilden dabei also eine Art Negativform für die Prägefläche. Auf diese Weise ist die Prägefläche in demjenigen Bereich der Metallfolien gebildet, welcher zwischen den ersten Fortsätzen und der diesen gegenüberliegenden Sonotrode bzw. des diesen gegenüberliegenden Ambosses angeordnet ist.

Dabei weist, sofern die Sonotrode die ersten Fortsätze aufweist, der Amboss eine Kontur auf, welche mittels einer Anzahl von zu dessen Arbeitsfläche emporstehenden zweiten Fortsätzen ausgebildet ist. Alternativ hierzu weist der Amboss eine als eine Anzahl an Aussparungen in dessen Arbeitsfläche auf, mittels welchen Aussparungen die Konturgebildet ist, und welche zu den ersten Fortsätzen, insbesondere zu deren Form und Anordnung zueinander, korrespondieren.

Sofern der Amboss die ersten Fortsätze aufweist, weist die Sonotrode die mittels einer Anzahl an zu deren Arbeitsfläche emporstehenden zweiten Fortsätzen gebildete Kontur auf. Alternativ hierzu weist die Sonotrode die mittels Aussparungen gebildete Kontur auf, welche zu den ersten Fortsätzen, insbesondere zu deren Form und Anordnung zueinander, korrespondieren.

Grundsätzlich, aber nicht erfindungsgemäß, ist es möglich, dass dabei der Amboss und die Sonotrode derart zueinander ausgerichtet sind, dass die ersten Fortsätze und die zweiten Fortsätze in einer Richtung senkrecht zu den Arbeitsflächen einander gegenüberliegen, also in Gegenüberstellung angeordnet sind. Auf diese Weise ist die Prägefläche in einem Bereich der Metallfolien eingebracht, welcher zwischen den ersten Fortsätzen und den diesen gegenüberliegenden zweiten Fortsätzen angeordnet ist. Erfindungsgemäß, sofern die Kontur mittels der Aussparungen gebildet ist, sind der Amboss und die Sonotrode derart zueinander ausgerichtet, dass die ersten Fortsätze und die Aussparung in einer Richtung senkrecht zu den Arbeitsflächen einander gegenüberliegen, also in Gegenüberstellung angeordnet sind. Insbesondere greifen im Zuge des Ultraschallschweißvorgangs die ersten Fortsätze zumindest teilweise in einer Richtung senkrecht zu den Arbeitsflächen der Sonotrode und des Ambosses in die entsprechenden Aussparungen ein. Auf diese Weise ist die Prägefläche in den Aussparungen, also innerhalb der Sonotrode bzw. des Ambosses, in die Metallfolien eingebracht.

Alternativ hierzu sind erfindungsgemäß die ersten Fortsätze und die zweiten Fortsätze bezüglich einer Richtung parallel zu den Arbeitsflächen, insbesondere rasterartig, zu den zweiten Fortsätzen versetzt. Dies wird auch als Zwischenstellung der ersten Fortsätze und der zweiten Fortsätze bezeichnet. Im Zuge des Ultraschweißvorgangs wird die Prägefläche somit in einem Bereich der Metallfolien eingebracht, welcher zwischen den ersten Fortsätzen und dem diesen gegenüberliegenden Werkzeug, also der Sonotrode bzw. des Ambosses, angeordnet ist. Hierbei ist die Prägefläche zwischen den zweiten Fortsätzen angeordnet. Insbesondere greifen die ersten Fortsätze zumindest teilweise in einer Richtung senkrecht zu den Arbeitsflächen der Sonotrode und des Ambosses zwischen die zweiten Fortsätze ein. Die ersten Fortsätze und die zweiten Fortsätze bilden dabei zusammen eine Art Negativform für die Prägefläche.

Zweckmäßigerweise sind zum Ausrichten des Ambosses und der Sonotrode zueinander sowohl an der Sonotrode, als auch am Amboss Referenzpunkte vorgesehen. Diese Referenzpunkte werden für das Ultraschallverschweißen der Metallfolien zueinander ausgerichtet, beispielswiese derart, dass die Referenzpunkt der Sonotrode mit den zu diesen korrespondierenden Referenzpunkten des Ambosses in einer gemeinsamen Richtung senkrecht zu den Arbeitsflächen miteinander fluchten. Zweckmäßigerweise sind dabei die ersten Fortsätze und die Kontur bezüglich der jeweiligen Referenzpunkte in einem definierten Abstand und in einer definierten relativen Lage zu den Referenzpunkten angeordnet. Alternativ zu Referenzpunkten kann auch eine Referenzlinie, eine Referenzkurve, eine Referenzfläche oder auch eine Kombination aus diesen herangezogen werden.

Sonotroden weisen bezüglich deren Körperschallleitung und/oder deren Schwingungsverhalten im Vergleich zum Amboss vergleichsweise hohe Anforderungen auf. Bei einem Ausrichten kann die Sonotrode beispielsweise beschädigt oder verstellt werden. Aufgrund dessen wird vorzugsweise der Amboss bezüglich der Sonotrode ausgerichtet. Beispielsweise wird der Amboss durch eine geeignete Klemmung entsprechend der Referenzpunkte befestigt. Zweckmäßigerweise sind hierbei die Toleranzen der Referenzpunkte bezüglich der Fortsätze und die (Herstellungs-) Toleranzen der Fortsätze selbst möglichst gering gewählt.

Die ersten Fortsätze, die Aussparung und/oder die zweiten Fortsätze können beispielsweise pyramidenförmig, halbkugelförmig oder halbzylinderförmigen sein. Gemäß einer bevorzugten Ausgestaltung sind die erste Fortsätze, die Aussparung und/oder die zweite Fortsätze prismen-, oder pyramidenstumpfförmig. Das jeweilige Prisma weist beispielsweise ein Dreieck oder ein Trapez als Grundfläche auf, wobei sich das Prisma parallel zur entsprechenden Arbeitsfläche erstreckt. Mittels einer geeigneten Wahl der Form der ersten Fortsätze, der Aussparung und/oder der zweiten Fortsätze ist die Prägefläche und entsprechend ein mittels des Laserstrahls zu verschmelzender Bereich der Metallfolien, welcher verschmolzene Bereich insbesondere eine (Laser-)Schweißnaht bildet, einstellbar bzw. eingestellt. Auf diese Weise kann eine Anordnung, also eine Position sowie ein Verlauf der Laserschweißnähte beispielsweise entsprechend zu erwartende Zugkräfte und/oder einer vorgegebenen Robustheit, also einer Zuverlässigkeit der Verbindung, eingestellt werden. Die Erstreckungsrichtung der, insbesondere prismenförmigen oder halbkugelförmigen, Fortsätze ist parallel oder unter einem Winkel zur Schwingungsrichtung der Sonotrode orientiert. Vorzugsweise jedoch ist die Erstreckungsrichtung der Fortsätze quer, also senkrecht, zur Schwingungsrichtung des Sonotrode.

Weiterhin weisen die ersten Fortsätze, die Aussparung und/oder die zweiten Fortsätze erfindungsgemäß eine Höhe zwischen 0,02 mm und 1,0 mm, insbesondere zwischen 0,05 mm und 0,5 mm, auf. Die Höhe der ersten Fortsätze und/oder der zweiten Fortsätze wird insbesondere in Abhängigkeit der Anzahl der zu fügenden Metallfolien, sowie in Abhängigkeit deren Dicke gewählt. Die Höhe der Aussparung ist insbesondere anhand der Höhe der ersten Fortsätze gewählt. Unter der Höhe wird hierbei die Ausdehnung der Fortsätze oder der Aussparung in einer Richtung senkrecht zur jeweiligen Arbeitsfläche verstanden.

Insbesondere sofern ein Zellableiter (Tab) an den Metallfolien mittels der Ultraschallschweißvorrichtung fixiert, insbesondere geheftet, werden soll, weisen gemäß einer zweckmäßigen Weiterbildung die zweiten Fortsätze eine geringere Höhe als die ersten Fortsätze auf. Die zweiten Fortsätze dienen in diesem Falle insbesondere zum Halten des Zellableiters im Zuge des Ultraschallschweißvorgangs. Beispielsweise beträgt die Höhe der zweiten Fortsätze weniger als die Hälfte der Höhe, insbesondere weniger als ein Viertel der Höhe, der ersten Fortsätze.

Gemäß einer bevorzugten Ausgestaltung weist die Sonotrode mehrere parallel zueinander verlaufende erste Fortsätze auf. Hierbei sind die ersten Fortsätze, vorzugsweise prismenförmig, vorzugsweise mit einem Trapez als Grundfläche. Insbesondere weisen dabei die zweiten Fortsätze eine kleinere Höhe als die ersten Fortsätze auf, wobei die zweiten Fortsätze als Pyramiden ausgebildet sind. Beispielsweise sind die als Pyramiden ausgebildeten zweiten Fortsätze in mehreren Reihen angeordnet, welche parallel zu den prismenförmigen ersten Fortsätzen verlaufen. Dabei sind in einer Richtung parallel zu den Arbeitsflächen und senkrecht zur Erstreckungsrichtung der als Prismen ausgebildeten ersten Fortsätze. zwischen zwei der ersten Fortsätze jeweils zwei oder drei der Reihen der zweiten Fortsätze angeordnet. Die ersten Fortsätze und die zweiten Fortsätze sind also in einer Richtung senkrecht zur Erstreckungsrichtung der Prismen und parallel zur den Arbeitsflächen insbesondere rasterartig zueinander versetzt angeordnet.

Zusätzlich zur Ultraschallschweißvorrichtung umfasst die Vorrichtung erfindungsgemäß ein Lasergerät zur Erzeugung eines Laserstrahls für das Laserstrahlschweißen der Metallfolien des Metallfolienstapels im Bereich der Prägefläche.

Das Verfahren dient der Herstellung eines Metallfolienstapels aus Metallfolien, insbesondere für eine Zelle einer Lithium-Ionen-Batterie, welche Zelle beispielsweise als eine Pouchzelle ausgebildet ist. Dabei werden in einem ersten Schritt übereinandergestapelte Metallfolien bereitgestellt. Insbesondere bilden diese Metallfolien die Anoden oder die Kathoden der (Batterie-)Zelle.

In einem zweiten Schritt werden die Metallfolien, insbesondere in einem seitlich abstehenden Abschnitt, welcher auch als Fähnchen der jeweiligen Metallfolie bezeichnet wird, unter Bildung der Prägefläche mittels einer Ultraschallschweißvorrichtung kompaktiert und zueinander fixiert. Dabei ist dabei die Ultraschallschweißvorrichtung diejenige einer Vorrichtung nach einer der oben dargelegten Varianten.

In einem anschließenden dritten Schritt werden die Metallfolien im Bereich der Prägefläche mittels eines Laserstrahls miteinander verschweißt. Hierzu wird, wie oben dargelegt, die Prägefläche mit einem Laserstrahl beaufschlagt oder entlang einer mittels der Prägefläche definierten Bahn verfahren. Beispielsweise wird mittels des Laserstrahls eine Punktnaht, eine Steppnaht oder eine durchgehende linien- oder kurvenförmige Schweißnaht erzeugt. Beispielsweise zusätzlich wird der Laser mit einer sogenannten Wobble-Funktion betrieben, so dass die Schweißnaht vergleichsweise breit ist und der Laserstrahl über eine vergleichsweise große Fläche verfährt.

Entsprechend umfasst eine Vorrichtung zur Herstellung des Metallfolienstapels die Ultraschallschweißvorrichtung, vorzugsweise in einer der oben dargestellten Varianten, sowie ein den Laserstrahl erzeugendes Lasergerät, wobei das Lasergerät zweckmäßig bezüglich der ersten Fortsätze ausgerichtet ist. Insbesondere wird diese Vorrichtung also zur Durchführung des Verfahrens herangezogen.

Gemäß einer geeigneten Weiterbildung wird im Zuge des Kompaktierens, also im Zuge des zweiten Schritts des Verfahrens, der elektrische Zellableiter an den Metallfolien fixiert. Hierzu wird zweckmäßigerweise der Zellableiter zusammen mit den Metallfolien mittels des Ambosses und der Sonotrode des Ultraschallschweißgerätes durch Ultraschallschweißen gemeinsam kompaktiert. Anschließend wird der derart fixierte Zellableiter mittels des Laserstrahls im Bereich der Prägefläche an die Metallfolien angeschweißt.

Alternativ hierzu wird der Zellableiter lediglich im Zuge des Laserstrahlschweißens mit den Metallfolien verschweißt. Hierbei liegt der Zellableiter vorzugsweise auf dem kompaktierten Bereich, also im Bereich der Prägefläche der Metallfolien, auf. Infolgedessen ist eine Hohlraumbildung zwischen den Metallfolienstapel und dem Zellableiter im Zuge des Laserstrahlschweißens vermieden oder zumindest verringert.

Es ist möglich, dass der Laserstrahl auf die Metallfolien einfällt oder alternativ, dass der Laserstrahl auf den Zellableiter einfällt. Mit anderen Worten ist im Zuge des Laserstrahlschweißens entweder der Zellableiter zwischen dem Lasergerät und dem Metallfolienstapel angeordnet, oder der Metallfolienstapel ist zwischen dem Lasergerät und dem Zellableiter angeordnet.

Gemäß einer zweckmäßigen Ausgestaltung ist bzw. wird zum Kompaktieren eine Arbeitsfläche des Ambosses der Ultraschallschweißvorrichtung bezüglich der Arbeitsfläche der Sonotrode der Ultraschallschweißvorrichtung ausgerichtet. Insbesondere werden hierzu die Referenzpunkte, insbesondere die Referenzpunkte der Sonotrode, herangezogen.

Zudem ist zum Verschweißen der Metallfolien mittels des Laserstrahls, also für den dritten Schritt des Verfahrens, das Lasergerät bezüglich der Sonotrode so ausgerichtet, dass der Laserstrahl auf den Bereich der Prägefläche trifft oder entlang der Prägefläche verfahren wird bzw. verfährt.

Ein Metallfolienstapel wird gemäß dem oben dargelegten Verfahren und/oder mittels einer Ultraschallschweißvorrichtung in einer der oben dargelegten Varianten hergestellt. Insbesondere ist auf diese Weise eine vergleichsweise zuverlässige stoffschlüssige Verbindung (Fügung) der Metallfolien miteinander sowie des Zellableiters am Metallfolienstapel realisiert.

Nachfolgend werden Ausführungsbeispiele der Erfindung anhand einer Zeichnung näher erläutert. Darin zeigen:
- Fig. 1: schematisch in einer perspektivischen Ansicht eine Ultraschallschweißvorrichtung mit einem Amboss und mit einer Sonotrode, wobei die Sonotrode parallel zueinander verlaufende erste Fortsätze an deren Arbeitsfläche aufweist, mittels welchen eine Prägefläche in einen zwischen die Sonotrode und den Amboss eingebrachten Metallfolienstapel eingebracht wird,
- Fig. 2a bis c: in einer schematischen Draufsicht die Sonotrode, jeweils mit unterschiedlichen Ausgestaltungen der ersten Fortsätze,
- Fig. 3a bis d: in einer schematischen Draufsicht den Amboss, jeweils mit unterschiedlichen Varianten einer mittels zweiten Fortsätzen gebildeten Kontur, wobei die zweiten Fortsätze zu der Arbeitsfläche des Ambosses emporstehen,
- Fig. 4a: in einer schematischen Frontansicht den Metallfolienstapel, wobei ein Zellableiter an der Prägefläche angeordnet ist, und wobei die Metallfolien des Metallfolienstapels sowie der Zellableiter mittels eines entlang der Prägefläche verfahrenen Laserstrahls miteinander stoffschlüssig gefügt werden,
- Fig. 4b: in einer schematischen Draufsicht den Metallfolienstapel und den daran angeordneten Zellableiter,
- Fig. 5a: schematisch in einer Seitenansicht eine alternative Ausgestaltung der Ultraschallschweißvorrichtung, wobei der Amboss die ersten Fortsätze aufweist, und wobei die Sonotrode die mittels einer Anzahl an Aussparungen gebildete Kontur aufweist, und
- Fig. 5b: schematisch in einer Seitenansicht eine weitere alternative Ausgestaltung der Ultraschallschweißvorrichtung, wobei der Sonotrode die ersten Fortsätze aufweist, und wobei der Amboss die mittels einer Anzahl an Aussparungen gebildete Kontur aufweist.

Einander entsprechende Teile und Größen sind in allen Figuren stets mit gleichen Bezugszeichen versehen.

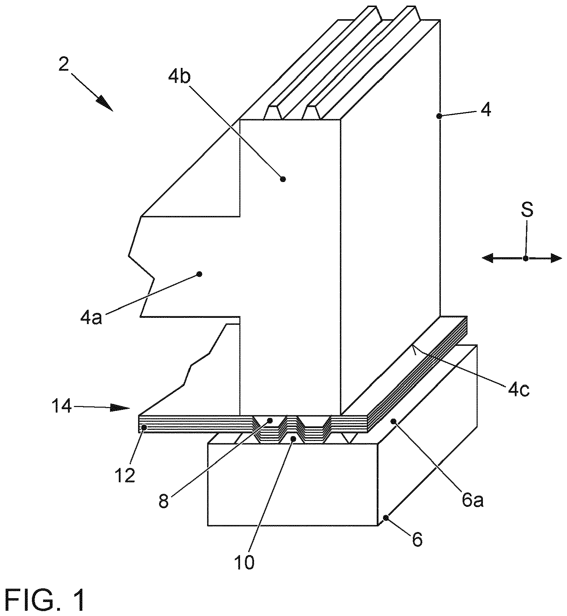

In der Fig. 1 ist ausschnittsweise eine Ultraschallschweißvorrichtung 2 dargestellt, welche eine Sonotrode 4 sowie einen Amboss 6 aufweist. Die Sonotrode 4 ist T-förmig mit einem Vertikalschenkel 4a und mit einem zu diesem quer verlaufenden Horizontalschenkel 4b ausgebildet, wobei der Vertikalschenkel 4a mit einem nicht weiter dargestellten Schwingersystem verbunden ist, mittels welchem die Sonotrode 4 in einer sich entlang des Vertikalschenkels 4a verlaufenden Schwingungsrichtung S in Schwingungen versetzt werden kann. Beispielsweise schwingt die Sonotrode hierbei mit einer Frequenz zwischen 2 kHz bis 40 kHz. Eine der Stirnseiten des Horizontalschenkels 4b ist dabei dem Amboss 6 zugewandt, wobei diese Stirnseite die Arbeitsfläche 4c der Sonotrode 4 bildet.

Die Sonotrode 4 weist an deren Arbeitsfläche 4c, welche dem Amboss 6 zugewandt ist, und an welcher im Zuge eines Ultraschallschweißvorgangs das zu bearbeitende Werkstück anliegt, zwei erste Fortsätze 8 auf. Der Amboss 6 weist eine Kontur auf, welche mittels drei zweiten Fortsätzen 10 gebildet ist, wobei diese zu der Arbeitsfläche 6a des Ambosses 6 emporstehen. Dabei sind sowohl die ersten Fortsätze 8 als auch die zweiten Fortsätze 10 jeweils parallel zueinander und prismenförmig ausgebildet, wobei die Prismen jeweils ein Trapez als Grundfläche aufweisen, und wobei sich die Prismen parallel zur Arbeitsfläche 4c bzw. 6a erstrecken. Dabei erstrecken sich die ersten Fortsätze 8 und die zweiten Fortsätze 10 quer zur Schwingungsrichtung S der Sonotrode 4.

Die Sonotrode 4 und der Amboss 6 sind dabei derart zueinander ausgerichtet, dass die ersten Fortsätze 8 und die zweiten Fortsätze 10 in einer Richtung parallel zur jeweiligen Arbeitsfläche 4c bzw. 6a und senkrecht zu Erstreckungsrichtung der Prismen, also in Schwingungsrichtung S der Sonotrode 4 rasterartig zueinander versetzt sind.

Grundsätzlich, aber nicht erfindungsgemäß, können gemäß einer nicht weiter dargestellten Variante der Amboss 6 und die Sonotrode 4 derart zueinander ausgerichtet sein, dass die ersten Fortsätze 8 und die zweiten Fortsätze 10 in einer Richtung, welche senkrecht zu den Arbeitsflächen 4c und 6a verläuft, einander gegenüberliegen. Mit anderen Worten sind die ersten Fortsätze 8 und die zweiten Fortsätze 10 bezüglich dieser Richtung in einer Gegenüberstellung angeordnet.

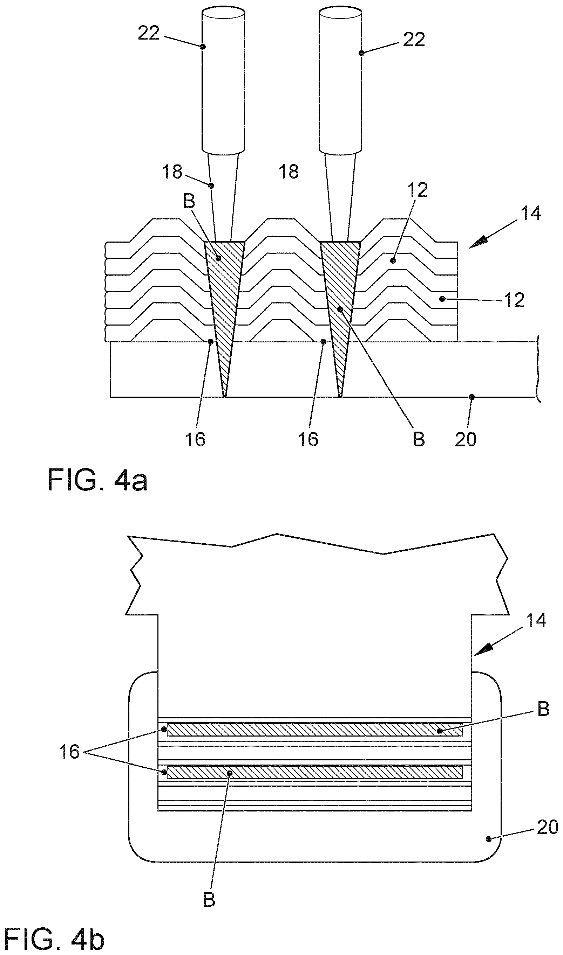

Zwischen den Amboss 6 und die Sonotrode 4 sind übereinandergestapelte Metallfolien 12 eingebracht. Der mittels der übereinandergestapelten Metallfolien 12 gebildete Metallfolienstapel 14 ist insbesondere für eine nicht weiter dargestellte Zelle eine Lithium-Ionen-Batterie, welche beispielsweise als eine sogenannte Pouchzelle ausgebildet ist, vorgesehen. Bei Verwendung der Ultraschallschweißvorrichtung 2, also im Zuge des Ultraschallschweißens der Metallfolien 12, werden diese unter Bildung einer Prägefläche 16 mittels der ersten Fortsätze 8 verdichtet (komprimiert). Die insbesondere in den Figuren 4a und 4b vergleichsweise gut erkennbare Prägefläche 16 ist bahnartig ausgestaltet. Die ersten Fortsätze 8 zusammen mit den zweiten Fortsätzen 10 bilden dabei eine Negativform für das Kompaktieren des Metallfolienstapels 14. Die beim Kompaktieren in den Metallfolienstapel 14 eingebrachte Prägefläche 16 definiert einen Bereich bzw. eine Bahn für einen Laserstrahl 18 im Zuge eines Laserstrahlschweißvorgangs (Laserschweißvorgangs), welcher in der Figur 4a dargestellt ist. Hierbei ist aufgrund des mittels des Ultraschallschweißvorgangs bewirkten Verdichtens des Metallfolienstapels16 im Bereich der Prägefläche 16 eine Hohlraumbildung zwischen den Metallfolien 12 vermieden oder zumindest reduziert und gleichbleibende (homogene) Bedingungen für das Laserstrahlschweißen realisiert. Auf diese Weise ist eine besonders zuverlässige Verbindung der Metallfolien 12 miteinander realisierbar.

Die Metallfolien liegen lediglich abschnittsweise auf der Arbeitsfläche 6a des Ambosses 6 auf. Die in der Fig. 1 gezeigten Abschnitte der Metallfolien 12, welche Abschnitte zum miteinander Fügen vorgesehen sind, werden auch als Fähnchen bezeichnet. In nicht näher dargestellter Weise sind die Metallfolien 12 mit Ausnahme der Fähnchen auf einem Träger positioniert.

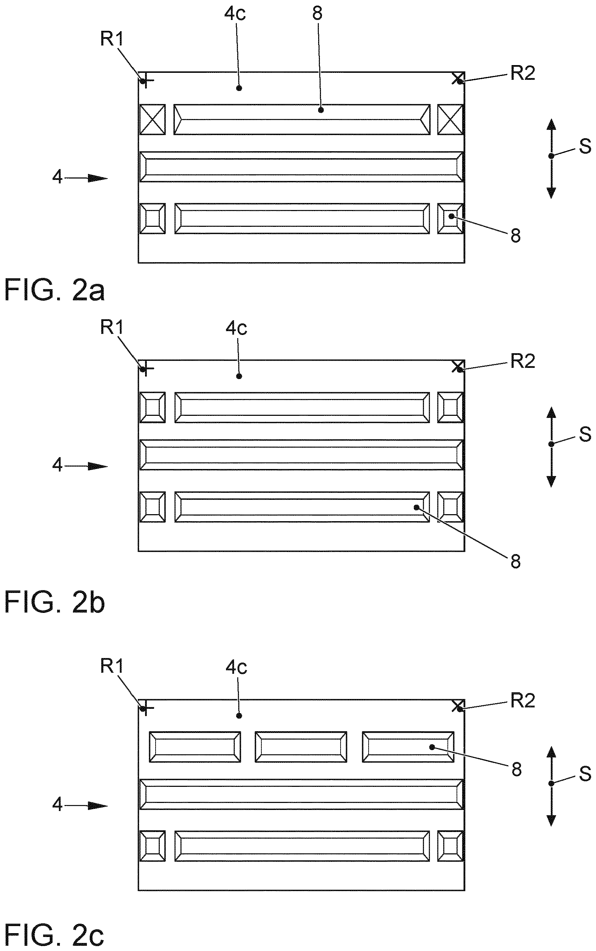

In den Figuren 2a bis 2c sind in einer Draufsicht die Sonotrode 4 mit jeweils zueinander verschiedenen Ausgestaltungen deren ersten Fortsätze 8 dargestellt. Hierbei sind jeweils drei Reihen an ersten Fortsätzen 8 gebildet, welche sich senkrecht zu einer Schwingungsrichtung S der Sonotrode 4 erstrecken. Gemäß einer nicht weiter dargestellten Ausgestaltung erstrecken sich die Reihen der ersten Fortsätze 8 parallel oder unter einem Winkel zur Schwingungsrichtung S der Sonotrode 4.

Die drei Reihen der ersten Fortsätze 8 sind dabei zueinander beanstandet angeordnet. In die Fig. 2a weist die oben dargestellte Reihe der ersten Fortsätze 8 zwei außenliegende, als Pyramiden ausgebildete erste Fortsätze 8 und einen zwischen diesen angeordnete und prismenförmigen Fortsatz 8 auf, dessen Grundfläche als Dreieck ausgebildet ist. Die mittlere Reihe ist dabei mittels eines einzigen prismenförmigen ersten Fortsatzes 8 gebildet, und die dritte Reihe mit drei ersten Fortsätzen 8, wobei die beiden äußeren jeweils als ein Pyramidenstumpf ausgebildet sind, und der zwischen diesen angeordnete und sich von deinem der Pyramidenstümpfe zum anderen Pyramidenstumpf dieser Reihe erstreckende erste Fortsatz 8 als ein Prisma mit einem Trapez als Grundform ausgebildet ist.

Bei der in der Fig. 2b gezeigten Ausgestaltung der Sonotrode 4 entsprechen die mittlere und die untere dargestellte Reihen der mittleren und der unteren Reihe der Ausgestaltung gemäß der Fig. 2a. Die oben dargestellte Reihe der Ausgestaltung der Sonotrode 4 ist analog zu deren dritten Reihe an ersten Fortsätzen 8 ausgebildet, weist also zwei außenliegende pyramidenstumpfförmige erste Fortsätze 8 und einen zwischen diesen angeordneten prismenförmigen ersten Fortsatz 8 auf.

Die Ausgestaltung der Sonotrode 4 der Fig. 2c weist im Unterschied zu der Ausgestaltung der Figuren 2a und 2b in der oben dargestellten Reihe an ersten Fortsätzen 8 drei jeweils als ein Prisma mit einem Trapez als Grundfläche ausgebildete Fortsätze 8 auf, wobei sich die drei Prismen entlang einer gemeinsamen Richtung erstrecken.

Die Prismen der in den Fig. 2a bis 2c Ausgestaltungen sind endseitig bezüglich deren Erstreckungsrichtung gegen die Arbeitsfläche 4c abgeschrägt.

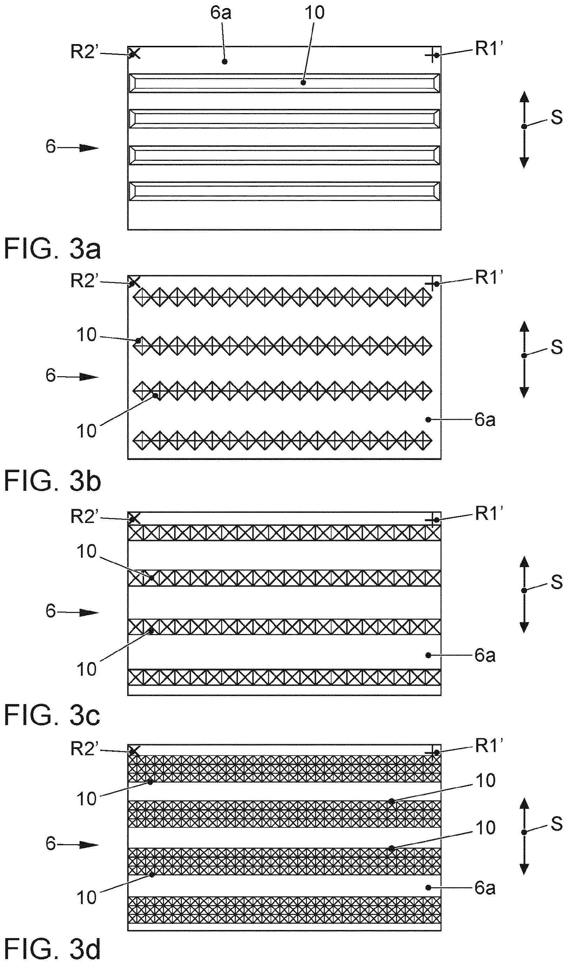

In den Figuren 3a bis 3d sind unterschiedliche Varianten der zur Arbeitsfläche 6a des Ambosses 6 emporstehenden zweiten Fortsätze10 gezeigt. Gemäß den Figuren 3a bis 3c sind dabei mittels der zweiten Fortsätze 10 jeweils vier Reihen gebildet, welche parallel zueinander verlaufen, und welche rasterartig zu den mittels der ersten Fortsätzen 8 der Sonotrode 4 gebildeten Reihen gemäß einer der Varianten der Figuren 2a bis 2c versetzt sind. Mit anderen Worten überlappen die ersten Fortsätze 8 in einer Richtung senkrecht zu den Arbeitsflächen 4c, 6a nicht mit den zweiten Fortsätzen 10.

In der Fig. 3a sind die vier Reihen jeweils mittels eines einzigen prismenförmigen zweiten Fortsatzes 10 gebildet. In der Figur 3b sind die vier Reihen jeweils mit einer Vielzahl an pyramidenförmigen zweiten Fortsätzen 10 gebildet, wobei die Pyramiden jeweils eine quadratische Grundfläche aufweisen, und wobei die in Pyramiden der jeweiligen Reihe derart nebeneinander angeordnet, dass eine der Diagonalen der Grundformen aller Pyramiden auf einer gemeinsamen Geraden liegen.

Bei der in der Fig. 3c gezeigten Variante des Ambosses 6 sind die vier Reihen der zweiten Fortsätze 10 ebenfalls mittels Pyramiden mit quadratischen Grundflächen gebildet. Hierbei sind jedoch die Pyramiden derart in einer Reihe angeordnet, dass zwei einander gegenüberliegende Seiten der Grundflächen aller Pyramiden auf zwei zueinander parallelen Geraden verlaufen.

In der Fig. 3d ist eine weitere Ausgestaltung des Ambosses 6 dargestellt, bei welcher die zweiten Fortsätze 10 jeweils als Pyramiden ausgebildet sind. Die pyramidenförmigen zweiten Fortsätze 10 sind in zwölf Reihen angeordnet, wobei die zwölf Reihen in vier Gruppen zu jeweils drei Reihen aufgeteilt sind. Die vier Gruppen sind dabei zueinander beabstandet angeordnet. In jeder der Gruppen sind die Pyramiden schachbrettartig zueinander angeordnet. Entlang der Geraden parallel zur Schwingungsrichtung S und parallel zur Arbeitsfläche 4c bzw. 6a sind die ersten Fortsätze 8 der Sonotrode 4, welche gemäß einer der Ausgestaltungen der Figuren 1 bis 2c ausgebildet sind, und die zweiten Fortsätze 10 zueinander im Verhältnis 3:1 rasterartig versetzt. Mit anderen Worten sind in dieser Richtung alternierend ein erster Fortsatz 8 und drei zweite Fortsätze 10 angeordnet.

In nicht dargestellten weiteren Varianten sind die ersten Fortsätze 8 und/oder die zweiten Fortsätze 10 halbkugelförmig oder zylinderförmig, insbesondere halbzylinderförmig.

Die in den Figuren 2a bis 2c und 3a bis 3d gezeigten ersten Fortsätze 8 und die dort gezeigten zweiten Fortsätze 10 weisen dabei eine Höhe zwischen 0,05 mm und 0,5 mm auf. Dabei weisen die zweiten Fortsätze 10 der Figuren 3b bis 3d eine geringere Höhe als die ersten Fortsätze auf. Die in der Figur 3d gezeigten zweiten Fortsätze 10 weisen weniger als ein Viertel der Höhe der ersten Fortsätze der Figuren 2a bis 2c auf.

Weiterhin weisen die Sonotrode 4 sowie der Amboss 6 jeweils zwei Referenzpunkte R1 und R2 bzw. R1' und R2' auf, mittels welchen der Amboss 6 bezüglich der Sonotrode 4 ausgerichtet wird. Dabei korrespondieren im ausgerichteten Zustand der Referenzpunkt R1 mit dem Referenzpunkt R1'und analog der Referenzpunkt R2 mit dem Referenzpunkt R2'. Also sind die zueinander korrespondierenden Referenzpunkte R1 und R1' bzw. R2 und R2' jeweils auf einer gemeinsamen Geraden angeordnet, welche sich in einer Richtung senkrecht zu den Arbeitsflächen 4c und 6a erstrecken.

Wie in den Figuren 4a und 4b erkennbar ist, liegt der Metallfolienstapel 14 auf einem Zellableiter 20 auf. Dabei liegt der Zellableiter 20 auf dem kompaktierten Bereich, also im Bereich der Prägefläche 16 des Metallfolienstaples 14 an. Die in den Metallfolienstapel 14 eingebrachte Prägefläche 16 definiert einen Bereich bzw. eine Bahn für den Laserstrahl 18, so dass im Zuge des Laserstrahlschweißvorgangs mittels des Laserstrahls 18 die Metallfolien 12 miteinander sowie der Metallfolienstapel 14 mit dem Zellableiter 20 gefügt werden. Also verschmelzen aufgrund der Einwirkung des Laserstrahls 18 die Metallfolien 12 miteinander und mit dem Zellableiter 20. Der miteinander verschmolzene Bereich B, welcher insbesondere eine Schweißnaht bildet, ist zum Zwecke einer verbesserten Erkennbarkeit schraffiert dargestellt. Ferner ist für den Laserstrahlschweißvorgang ein den Laserstrahl 18 erzeugende Lasergerät 22 bezüglich der Sonotrode 4 so ausgerichtet, dass der Laserstrahl 18 entlang der Prägefläche 16 verfährt.

In einer nicht weiter dargestellten Variante wird der Zellableiter 20 bereits im Zuge des Kompaktierens der Metallfolien 12 durch den Ultraschallschweißvorgang an den Metallfolienstapel 16 fixiert, insbesondere angeheftet, und anschließend im Zuge des Verschweißen der Metallfolien 12 mittels des Laserstrahls 18 im Bereich der Prägefläche 16 an den Metallfolienstapel 16 angeschweißt.

Gemäß einer nicht weiter dargestellten Alternative der Fig. 4a liegt der Metallfolienstapel 14 ebenfalls auf dem Zellableiter 20 auf, wobei der Zellableiter 20 auf dem kompaktierten Bereich, also im Bereich der Prägefläche 16 des Metallfolienstaples 14 aufliegt. Im Vergleich zu der in Fig.4a gezeigten Variante ist das Lasergerät 22 jedoch derart ausgerichtet, dass der Laserstrahl 18 auf den Zellableiter 20 auftrifft. Dabei ist das Lasergerät 20 derart ausgerichtet, dass der Laserstrahl 18 im Bereich der Prägefläche 16 des Metallfolienstapels 14 einwirkt. Der Zellableiter 20 ist also zwischen dem Lasergerät 22 und dem Metallfolienstapel 14 angeordnet.

Zusammenfassend werden also in einem Verfahren zur Herstellung des Metallfolienstapels 14 in einem ersten Schritt übereinandergestapelte Metallfolien 12 bereitgestellt. In einem zweiten Schritt werden die Metallfolien 12 unter Bildung der Prägefläche 16 mittels der Ultraschallschweißvorrichtung 2, welche gemäß einer der Ausgestaltungen der Figuren 1 bis 3 ausgebildet ist, kompaktiert, wobei hierzu die Arbeitsfläche 6a des Ambosses 6 der Ultraschallschweißvorrichtung 2 bezüglich der Arbeitsfläche 4c der Sonotrode 4 ausgerichtet ist bzw. wird. In einem dritten Schritt werden die Metallfolien 12 im Bereich der Prägefläche 16 mittels des Laserstrahls 18 miteinander verschweißt, wobei das den Laserstrahl 18 erzeugende Lasergerät 22 entsprechend bezüglich der Sonotrode 2 ausgerichtet ist.

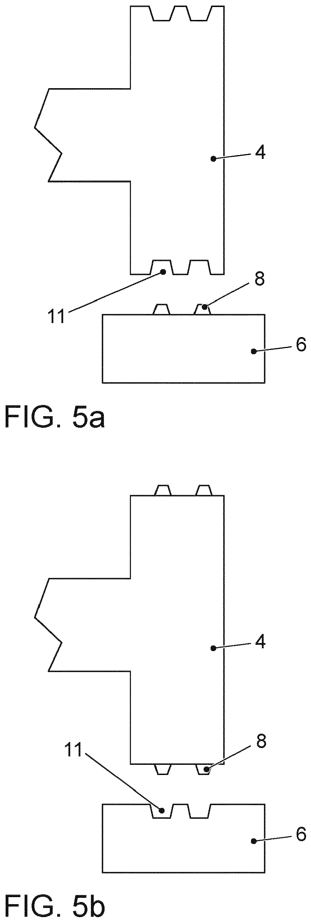

In den Figuren 5a und 5b sind jeweils eine alternative Ausgestaltung der Ultraschallschweißvorrichtung 2 dargestellt. Gemäß der Variante der Fig. 5a weist dabei wobei der Amboss 6 die ersten Fortsätze 8 auf. Die Sonotrode 4 weist die mittels einer Anzahl an Aussparungen 11 gebildete Kontur auf. Gemäß der Fig. 5b weist der Amboss die Sonotrode 4 die ersten Fortsätze 8, und der Amboss 6 weist die mittels der zu den ersten Fortsätzen 8 korrespondierenden Aussparungen 11 gebildete Kontur auf.

### Bezugszeichenliste

- 2: Ultraschallschweißvorrichtung
- 4: Sonotrode
- 4a: Vertikalschenkel der Sonotrode
- 4b: Horizontalschenkel der Sonotrode
- 4c: Arbeitsfläche der Sonotrode
- 6: Amboss
- 6a: Arbeitsfläche des Ambosses
- 8: erster Fortsatz
- 10: zweiter Fortsatz
- 11: Aussparung
- 12: Metallfolie
- 14: Metallfolienstapel
- 16: Prägefläche
- 18: Laserstrahl
- 20: Zellableiter
- 22: Lasergerät
- B: verschmolzener Bereich
- R1,R1`,R2,R2`: Referenzpunkte
- S: Schwingungsrichtung der Sonotrode

## Patentansprüche

1. Vorrichtung zur Herstellung des Metallfolienstapels (14), aufweisend
- eine Ultraschallschweißvorrichtung (2) zum Einbringen einer Prägefläche (16) in einen Metallfolienstapel (14), insbesondere für eine Zelle einer Lithium-lonen-Batterie,
- wobei die Ultraschallschweißvorrichtung (2) eine Sonotrode (4) und einen Amboss (6) aufweist, und
- wobei der Amboss (6) oder die Sonotrode (4) eine Anzahl an zu dessen bzw. zu deren Arbeitsfläche (4c bzw. 6a) emporstehenden ersten Fortsätzen (8) zur Bildung der, insbesondere bahnartigen, Prägefläche (16) durch Kompaktieren des Metallfolienstapels (14) aufweist,
- wobei, sofern die Sonotrode (4) die ersten Fortsätze (8) aufweist, der Amboss (6) eine Kontur aufweist, oder sofern der Amboss (6) die ersten Fortsätze (8) aufweist, die Sonotrode (4) die Kontur aufweist,
- wobei die Kontur mittels einer Anzahl an zu der jeweiligen Arbeitsfläche (4c bzw. 6a) emporstehenden zweiten Fortsätzen (10) oder mittels einer Anzahl an, insbesondere zu den ersten Fortsätzen (8) korrespondierenden, Aussparungen (11) der jeweiligen Arbeitsfläche (4c bzw. 6a) gebildet ist, und
- wobei der Amboss (6) und die Sonotrode (4) derart zueinander ausgerichtet sind, dass die ersten Fortsätze (8) und die Aussparungen (11)
in einer Richtung senkrecht zu den Arbeitsflächen (4c, 6a) einander gegenüberliegen, oder dass die ersten Fortsätze (8) bezüglich einer Richtung parallel zu den Arbeitsflächen (4c, 6a), insbesondere rasterartig, zu den zweiten Fortsätzen (10) versetzt sind,
- wobei die ersten Fortsätze (8), die Aussparungen (11) und/oder die
zweiten Fortsätze (10) eine Höhe zwischen 0,02 mm und 1,0 mm, insbesondere zwischen 0,05 mm und 0,5 mm, aufweisen, und
- ein Lasergerät (22) zur Erzeugung eines Laserstrahls (18) für das Verschweißen der Metallfolien (12) des Metallfolienstapels (14) im Bereich der Prägefläche (16), wobei das Lasergerät (22) bezüglich der Sonotrode (4) ausgerichtet ist.

2. Vorrichtung nach Anspruch 1, **dadurch gekennzeichnet, dass** die ersten Fortsätze (8), die Aussparung (11) und/oder die zweiten Fortsätze (10) prismen- oder pyramidenstumpfförmig sind, wobei sich die prismenförmigen Fortsätze (8 bzw. 10) insbesondere quer zu einer Schwingungsrichtung (S) der Sonotrode (4) erstrecken.

3. Vorrichtung nach Anspruch 1 oder 2,
**dadurch gekennzeichnet,**
**dass** die zweiten Fortsätze (10) eine geringere Höhe als die ersten Fortsätze (8), beispielsweise weniger als die Hälfte der Höhe der ersten Fortsätze (8), insbesondere weniger als ein Viertel der Höhe der ersten Fortsätze (8), aufweisen.

4. Vorrichtung nach einem der Ansprüche 1 bis 3,
**dadurch gekennzeichnet,**
**dass** die Sonotrode (4) mehrere parallel zueinander verlaufende erste Fortsätze (8) aufweist.

5. Verfahren zur Herstellung eines Metallfolienstapels (14) aus Metallfolien (12), insbesondere für eine Zelle einer Lithium-Ionen-Batterie,
- wobei übereinandergestapelte Metallfolien (12) bereitgestellt werden,
- wobei die Metallfolien (12) unter Bildung einer Prägefläche (16) mittels einer Ultraschallschweißvorrichtung (2) einer nach einem der Ansprüche 1 bis 4 ausgebildeten Vorrichtung (14) kompaktiert werden, und
- wobei die Metallfolien (12) im Bereich der Prägefläche (16) mittels eines Laserstrahls (18) miteinander verschweißt werden.

6. Verfahren nach Anspruch 5,
**dadurch gekennzeichnet,**
- **dass** im Zuge des Verschweißens der Metallfolien (12) mittels des Laserstrahls (18) ein elektrischer Zellableiter (20) im Bereich der Prägefläche (16) an die Metallfolien (12) angeschweißt wird, oder dass der elektrische Zellableiter (20) im Zuge des Kompaktierens an den Metallfolien (12) fixiert und anschließend im Zuge des Verschweißens der Metallfolien (12) mittels des Laserstrahls (18) im Bereich der Prägefläche (16) an die Metallfolien (12) angeschweißt wird,
- wobei der Zellableiter (20) zwischen einem den Laserstrahl (18) erzeugenden Lasergerät (22) und den Metallfolien (12) angeordnet ist, oder wobei die Metallfolien (12) zwischen dem Zellableiter (20) und dem Lasergerät (22) angeordnet sind.

7. Verfahren nach Anspruch 5 oder 6, **dadurch gekennzeichnet,**
- **dass** zum Kompaktieren eine Arbeitsfläche (6a) eines Ambosses (6) der Ultraschallschweißvorrichtung (2) bezüglich einer Arbeitsfläche (4c) einer Sonotrode (4) der Ultraschallschweißvorrichtung (2), insbesondere anhand von Referenzpunkten (R1, R1', R2, R2') der Sonotrode (4) und des Ambosses (6), ausgerichtet wird bzw. ist, und
- **dass** zum Verschweißen mittels des Laserstrahls (18) das Lasergerät (22) bezüglich der Sonotrode (4), insbesondere anhand deren Referenzpunkte (R1, R2), derart ausgerichtet wird, dass der Laserstrahl (18) auf den Bereich der Prägefläche (16) trifft oder entlang der Prägefläche (16) verfahren wird bzw. verfährt.

## Claims

1. Device for producing a metal foil stack (14), comprising
- an ultrasonic welding device (2) for introducing an embossed surface (16) into a metal foil stack (14), in particular for a cell of a lithium-ion battery,
- wherein the ultrasonic welding device (2) has a sonotrode (4) and an anvil (6), and
- wherein the anvil (6) or the sonotrode (4) has a number of first projections (8) which protrude from its work surface (4c or 6a) and are intended for forming the, in particular web-like, embossed surface (16) by compacting the metal foil stack (14),
- wherein if the sonotrode (4) has the first projections (8), the anvil (6) has a contour, or if the anvil (6) has the first projections (8), the sonotrode (4) has the contour,
- wherein the contour is formed by a number of second projections (10) which protrude from the respective work surface (4c or 6a) or by a number of recesses (11), in particular corresponding to the first projections (8), in the respective work surface (4c or 6a), and
- wherein the anvil (6) and the sonotrode (4) are aligned in relation to one another such that the first projections (8) and the recesses (11) are situated opposite one another in a direction perpendicular to the work surfaces (4c, 6a), or such that the first projections (8) are offset relative to the second projections (10) with respect to a direction parallel to the working surfaces (4c, 6a), in particular in the manner of a raster,
- wherein the first projections (8), the recesses (11) and/or the second projections (10) have a height of between 0.02 mm and 1.0 mm, in particular between 0.05 mm and 0.5 mm, and
- a laser apparatus (22) for generating a laser beam (18) for welding the metal foils (12) of the metal foil stack (14) in the region of the embossed surface (16), wherein the laser apparatus (22) is aligned with respect to the sonotrode (4).

2. Device according to Claim 1,
**characterized in that**
the first projections (8), the recess (11) and/or the second projections (10) are prism-shaped or have a frustopyramidal shape, wherein the prism-shaped projections (8 and/or 10) extend in particular transversely to an oscillation direction (S) of the sonotrode (4).

3. Device according to Claim 1 or 2,
**characterized in that**
the second projections (10) have a smaller height than the first projections (8), for example less than half the height of the first projections (8), in particular less than one quarter of the height of the first projections (8).

4. Device according to one of Claims 1 to 3,
**characterized in that**
the sonotrode (4) has multiple first projections (8) extending parallel to one another.

5. Method for producing a metal foil stack (14) of metal foils (12), in particular for a cell of a lithium-ion battery,
- wherein metal foils (12) stacked one on top of another are provided,
- wherein the metal foils (12) are compacted to form an embossed surface (16) by means of an ultrasonic welding device (2) of a device (14) designed according to one of Claims 1 to 4, and
- wherein the metal foils (12) are welded to one another in the region of the embossed surface (16) by means of a laser beam (18).

6. Method according to Claim 5,
**characterized in that**,
- while the metal foils (12) are being welded by means of the laser beam (18), an electrical tab (20) is welded onto the metal foils (12) in the region of the embossed surface (16), or **in that** the electrical tab (20) is fixed on the metal foils (12) during the compaction and then, while the metal foils (12) are being welded by means of the laser beam (18), is welded onto the metal foils (12) in the region of the embossed surface (16),
- wherein the tab (20) is arranged between a laser apparatus (22) that generates the laser beam (18) and the metal foils (12), or wherein the metal foils (12) are arranged between the tab (20) and the laser apparatus (22).

7. Method according to Claim 5 or 6,
**characterized in that**,
- for compacting purposes, a work surface (6a) of an anvil (6) of the ultrasonic welding device (2) is or has been aligned with respect to a work surface (4c) of a sonotrode (4) of the ultrasonic welding device (2), in particular on the basis of reference points (R1, R1', R2, R2') of the sonotrode (4) and of the anvil (6), and,
- for welding by means of the laser beam (18), the laser apparatus (22) is aligned with respect to the sonotrode (4), in particular on the basis of its reference points (R1, R2), such that the laser beam (18) strikes the region of the embossed surface (16) or is moved or moves along the embossed surface (16).

## Revendications

1. Dispositif pour la fabrication d'une pile de feuilles métalliques (14), présentant
- un dispositif de soudage par ultrasons (2) pour réaliser une surface d'estampage (16) dans une pile de feuilles métalliques (14), notamment pour une cellule d'une batterie lithium-ion,
- le dispositif de soudage par ultrasons (2) présentant une sonotrode (4) et une enclume (6), et
- l'enclume (6) ou la sonotrode (4) présentant un nombre de premiers prolongements (8) faisant saillie vers sa surface de travail (4c ou 6a) pour former la surface d'estampage (16), notamment en forme de bande, par compactage de la pile de feuilles métalliques (14),
- l'enclume (6) présentant un contour dans la mesure où la sonotrode (4) présente les premiers prolongements (8), ou la sonotrode (4) présentant le contour dans la mesure où l'enclume (6) présente les premiers prolongements (8),
- le contour étant formé au moyen d'un nombre de deuxièmes prolongements (10) faisant saillie vers la surface de travail respective (4c ou 6a) ou au moyen d'un nombre d'évidements (11) de la surface de travail respective (4c ou 6a), notamment en correspondance avec les premiers prolongements (8), et
- l'enclume (6) et la sonotrode (4) étant orientées l'une par rapport à l'autre de telle sorte que les premiers prolongements (8) et les évidements (11) se font face dans une direction perpendiculaire aux surfaces de travail (4c, 6a), ou que les premiers prolongements (8) sont décalés par rapport aux deuxièmes prolongements (10) par rapport à une direction parallèle aux surfaces de travail (4c, 6a), notamment à la manière d'une trame,
- les premiers prolongements (8), les évidements (11) et/ou les deuxièmes prolongements (10) présentant une hauteur comprise entre 0,02 mm et 1,0 mm, notamment entre 0,05 mm et 0,5 mm, et
- un appareil laser (22) pour produire un faisceau laser (18) pour le soudage des feuilles métalliques (12) de la pile de feuilles métalliques (14) dans la zone de la surface d'estampage (16), l'appareil laser (22) étant orienté par rapport à la sonotrode (4).

2. Dispositif selon la revendication 1,
**caractérisé en ce que**
les premiers prolongements (8), l'évidement (11) et/ou les deuxièmes prolongements (10) sont en forme de prisme ou de pyramide tronquée, les prolongements en forme de prisme (8 ou 10) s'étendant notamment transversalement à une direction d'oscillation (S) de la sonotrode (4).

3. Dispositif selon la revendication 1 ou 2,
**caractérisé en ce que**
les deuxièmes prolongements (10) présentent une hauteur inférieure à celle des premiers prolongements (8), par exemple inférieure à la moitié de la hauteur des premiers prolongements (8), notamment inférieure au quart de la hauteur des premiers prolongements (8).

4. Dispositif selon l'une quelconque des revendications 1 à 3,
**caractérisé en ce que**
la sonotrode (4) présente plusieurs premiers prolongements (8) parallèles entre eux.

5. Procédé de fabrication d'une pile de feuilles métalliques (14) de feuilles métalliques (12), notamment pour une cellule d'une batterie lithium-ion,
- dans lequel des feuilles métalliques (12) empilées les unes sur les autres sont fournies,
- dans lequel les feuilles métalliques (12) sont compactées en formant une surface d'estampage (16) au moyen d'un dispositif de soudage par ultrasons (2) d'un dispositif (14) configuré selon l'une quelconque des revendications 1 à 4, et
- dans lequel les feuilles métalliques (12) sont soudées entre elles dans la zone de la surface d'estampage (16) au moyen d'un faisceau laser (18).

6. Procédé selon la revendication 5,
**caractérisé en ce que**
- au cours du soudage des feuilles métalliques (12) au moyen du faisceau laser (18), un dérivateur électrique de cellules (20) est soudé aux feuilles métalliques (12) dans la zone de la surface d'estampage (16), ou **en ce que** le dérivateur électrique de cellules (20) est fixé sur les feuilles métalliques (12) au cours du compactage et est ensuite soudé sur les feuilles métalliques (12) au cours du soudage des feuilles métalliques (12) au moyen du faisceau laser (18) dans la zone de la surface d'estampage (16),
- le dérivateur de cellules (20) étant agencé entre un appareil laser (22) générant le faisceau laser (18) et les feuilles métalliques (12), ou les feuilles métalliques (12) étant agencées entre le dérivateur de cellules (20) et l'appareil laser (22).

7. Procédé selon la revendication 5 ou 6, **caractérisé en ce que**
- pour le compactage, une surface de travail (6a) d'une enclume (6) du dispositif de soudage par ultrasons (2) est orientée par rapport à une surface de travail (4c) d'une sonotrode (4) du dispositif de soudage par ultrasons (2), notamment à l'aide de points de référence (R1, R1', R2, R2') de la sonotrode (4) et de l'enclume (6), et
- pour le soudage au moyen du faisceau laser (18), l'appareil laser (22) est orienté par rapport à la sonotrode (4), notamment à l'aide de ses points de référence (R1, R2), de telle sorte que le faisceau laser (18) rencontre la zone de la surface d'estampage (16) ou se déplace le long de la surface d'estampage (16).
